# EUROPÄISCHE PATENTANMELDUNG

(11) **EP 0 904 919 A2**
(43) Veröffentlichungstag der Anmeldung: **31.03.1999**
(21) Anmeldenummer: 98118082.1
(22) Anmeldetag: 24.09.1998
(51) Int. Cl.: B29C 45/14, B29C 37/00

(54) **Verfahren zur Herstellung von Verbundformteilen aus thermoplastischen Kunststoffen**

(30) Priorität: 26.09.1997 DE 19742613
(71) Anmelder: BASF AKTIENGESELLSCHAFT, 67056 Ludwigshafen (DE)
(72) Erfinder: KNOLL, Manfred, 67591 Wachenheim (DE); BLINNE, Gerd Dr., 67273 Bobenheim (DE)
(74) Vertreter: Isenbruck, Günter, Dr.

(57) **Zusammenfassung**

In einem Verfahren zur Herstellung von Verbundformteilen mit einer Deckschicht und einer spritzgegossenen Kernkomponente aus thermoplastischen Kunststoffen bringt man einen pulverförmigen, thermoplastischen Kunststoff A durch Flammspritzen auf die Oberfläche eines Formwerkzeuges auf unter Ausbildung der Deckschicht, läßt den Kunststoff auf der Oberfläche erstarren und spritzt anschließend mit einem thermoplastischen Kunststoff B durch Spritzgießen aus.

## Beschreibung

Die vorliegende Erfindung betrifft ein Verfahren zur Herstellung von Verbundformteilen mit einer Deckschicht und einer spritzgegossenen Keinkomponente aus thermoplastischen Kunststoffen.

Es ist bekannt, auf spritzgegossene Formteile eine Deckschicht aufzubringen. In JP-A-5 5133 920 ist die Herstellung großer Behälter aus Polyethylen hoher Dichte beschrieben, wobei die einzelnen Teile des Behälters durch Spritzgießen erzeugt werden und anschließend mit einer Barriereschicht, z.B. mittels Flammspritzen, beschichtet werden. Dieses Verfahren hat den Nachteil, daß damit nur Formteile einfacher Geometrien gleichmäßig beschichtet werden können, da für das Flammspritzen bei schwierigen Geometrien eine gleich hohe Temperatur über die gesamte Oberfläche des Formkörpers schwer zu erreichen ist.

JP-A-6 1094 948 beschreibt ein spritzgegossenes Formteil aus einem aromatischen Polysulfidharz, dessen Oberfläche aufgerauht und mit einem Fluorharz, z.B. Polytetrafluorethylen, durch Aufsprühen und Aushärten beschichtet wird.

In EP-A-0 271 051 werden Formkörper mit einem kratzfesten Überzug hergestellt, indem ein Gemisch aus Monomeren und Radikalbildner auf die Oberfläche eines geöffneten Formwerkzeugs gespritzt wird, das Formwerkzeug geschlossen wird und mit einem thermoplastischen Kunststoff mittels Spritzgießen ausgespritzt wird, wenn die Monomeren teilweise polymerisiert worden sind.

JP-A-0 1221 227 beschreibt die Herstellung verstärkter Kunststoff-Formkörper, wobei ein Gel-beschichtetes Harz auf eine untere Formwerkzeughälfte aufgebracht wird, darüber die obere Formwerkzeughälfte, die mit gebrochenen Glasfasern bespritzt ist, angeordnet wird, und in den von der unteren und oberen Formwerkzeughälfte gebildeten Hohlraum ein ungesättigtes Poly-esterharz eingebracht wird.

In JP-A-0 3261 520 wird ein Gemisch aus PVC-Harzpulver mit Micaflocken und Glasfasern in den Hohlraum einer unteren Formwerkzeughälfte eingefüllt, das Gemisch geschmolzen, die obere Formwerkzeughälfte zum Schließen des Formwerkzeugs aufgesetzt und anschließend mit einem flüssigen Polyurethanharz spritzgegossen. In ähnlicher Weise wird in JP-A-0 3261 521 ein Gemisch aus PVC-Pulver und Phenolharz in den Hohlraum eines Formwerkzeugs eingefüllt und mit Polyurethan mittels Spritzgießen ausgespritzt, während das gefüllte Gemisch geschmolzen wird. Hierbei wird durch die Reaktion des Phenolharzes mit dem Polyurethan eine starke Bindung zwischen dem PVC und Polyurethan erreicht.

JP-A-0 5318 525 beschreibt das Aufbringen eines Films aus einer filmbildenden Komponente und einem Lösungsmittel auf eine Formwerkzeugoberfläche aus Metall, das Schließen des Formwerkzeugs und das Spritzgießen mit einem thermoplastischen Harz.

Bei den oben genannten Verfahren des Standes der Technik besteht das Problem, daß die Deckschicht nicht immer gleichmäßig dick auf das Formteil aufgetragen wird. Außerdem können keine handelsüblichen, kostengünstigen Thermoplaste für die Herstellung der Deckschicht eingesetzt werden. Vielmehr sind häufig zeitaufwendige Schritte notwendig, wie z.B. das Aushärten von Harzen oder das Abdampfen von Lösungsmitteln.

In JP-A-0 1253 415 wird eine dünne Deckschicht auf eine Metalloberfläche mittels Pulverbeschichtung aufgebracht.

Gegenüber dem Stand der Technik bestand die Aufgabe der vorliegenden Erfindung darin, ein verbessertes Verfahren zur Herstellung von Verbundformteilen zu schaffen, das auf wirtschaftliche Weise die Herstellung von Formkörpern mit einer möglichst gleichmäßigen Deckschicht, selbst bei schwierigen Geometrien der Formkörper, ermöglicht.

Überraschenderweise wurde gefunden, daß sich diese Aufgabe lösen läßt, wenn man einen thermoplastischen Kunststoff mittels Flammspritzen auf die Oberfläche eines Formwerkzeugs aufbringt und nach dem Erstarren des Kunststoffs mit einem weiteren thermoplastischen Kunststoff hinterspritzt.

Somit betrifft die Erfindung ein Verfahren zur Herstellung von Verbundformteilen mit einer Deckschicht und einer spritzgegossenen Keinkomponente aus thermoplastischen Kunststoffen, das dadurch gekennzeichnet ist, daß man einen pulverförmigen, thermoplastischen Kunststoff A durch Flammspritzen auf die Oberfläche eines Formwerkzeugs unter Ausbildung der Deckschicht aufträgt, den Kunststoff A auf der Oberfläche erstarren läßt und anschließend mit einem thermoplastischen Kunststoff B mittels Spritzgießen ausspritzt. Bevorzugte Ausführungsformen der Erfindung sind in den Unteransprüchen, der Beschreibung sowie den Beispielen beschrieben.

Erfindungsgemäß wird der Kunststoff A auf die Oberfläche eines Formwerkzeugs durch Flammspritzen aufgebracht. Beim Flammspritzen wird der Kunststoff in Pulverform beim Durchgang durch eine Flamme erweicht und auf eine Formwerkzeugoberfläche gespritzt. Hierbei wird zweckmäßigerweise ein Flammspritzgerät eingesetzt, das aus einem Gebläsebrenner, mit dem die Formwerkzeugoberfläche zunächst vorgewärmt werden kann, und einer eingebauten Vorrichtung zum Zuführen aufgewirbelten Kunststoffpulvers innerhalb der reduzierend eingestellten Flamme besteht. Beim Durchgang durch die Flamme wird der Kunststoff A erwärmt oder erhitzt, vorzugsweise mindestens auf seinen Erweichungspunkt oder seinen Schmelzpunkt, insbesondere auf 20 bis 60°C oberhalb seines Schmelz- bzw. Erweichungspunkts. Hierbei beziehen sich alle hierin angegebenen Erweichungspunkte oder Schmelzpunkte auf eine Bestimmung mittels DSC. Die Oberfläche des Formwerkzeugs, das vorzugsweise geöffnet ist, wird bevorzugt ebenfalls mindestens auf den Erweichungspunkt des Kunststoffs A erhitzt, wobei die bevorzugten Bereiche die gleichen wie beim Erwärmen bzw. Erhitzen des Kunststoffs A sind. Das Erhitzen der Formwerkzeugoberfläche erfolgt entweder direkt, z.B. mit der Flamme des Flammspritzgeräts, oder indirekt über z.B. Öltemperierung, heißes Wasser oder Dampf.

Das einsetzbare Formwerkzeug unterliegt keiner besonderen Beschränkung. Es können Formwerkzeuge mit Hohlräumen jeder Geometrie eingesetzt werden, wobei ein Vorteil des erfindungsgemäßen Verfahrens gerade darin besteht, daß damit auch Formkörper mit schwierigen Geometrien mit einer gleichmäßigen Deckschicht versehen werden können. Das Formwerkzeug besteht mindestens aus zwei Teilen, vorzugsweise aus zwei Hälften, und verfügt vorzugsweise über eine Heiz- bzw. Kühlvorrichtung, die seine Oberfläche indirekt erhitzen bzw. abkühlen kann. Der Kunststoff A kann als Deckschicht auf die Oberfläche nur einer oder aber beider Werkzeughälften aufgebracht werden. Die Aufsprühzeit hängt von der Geometrie des Hohlraums des Formwerkzeugs ab und beträgt meistens 5 bis 30 sec, vorzugsweise 5 bis 10 sec. Zweckmäßigerweise wird die Aufsprühzeit so gewählt, daß sie die Zeit für die Durchführung des gesamten Verfahrens zur Herstellung der Verbundformteile (Gesamtzykluszeit) nicht oder nur unwesentlich beeinflußt.

Nach dem Aufspritzen läßt man den Kunststoff A auf der Oberfläche erstarren. Vorzugsweise wird die Oberfläche des Formwerkzeugs hierbei abgekühlt, bevorzugt auf eine Temperatur von 20 bis 220°C, insbesondere 30 bis 180°C, unterhalb des Schmelz- oder Erweichungspunkts des Kunststoffs A. Zweckmäßigerweise erfolgt die Abkühlung, indem die Oberfläche des Formwerkzeugs indirekt, z.B. mit Wasser oder Öl, gekühlt wird. In einer bevorzugten Ausgestaltung der Erfindung wird die Deckschicht vor dem Abkühlen gesintert, indem man die Formwerkzeugoberfläche für 0,2 bis 3,0 Minuten, insbesondere 0,2 bis 1,0 Minuten, nach dem Aufspritzen des Kunststoffs A bei einer Temperatur von 15 bis 50°C, vorzugsweise von 15 bis 25°C, oberhalb des Schmelz- oder Erweichungspunkts des Kunststoffs A beläßt. Es besteht auch die Möglichkeit, daß die Temperatur der Werkzeugoberfläche einem Warm/Kalt-Zyklus ("Takten") unterzogen wird, bei dem die Formwerkzeugoberfläche zunächst bei einer Temperatur oberhalb des Schmelz- bzw. Erweichungspunkts gehalten wird, anschließend gekühlt wird und wiederum erhitzt wird. In Abhängigkeit von der gewünschten Gleichmäßigkeit der Deckschicht kann dieser Zyklus einmal oder auch mehrmals wiederholt werden.

Vorzugsweise beträgt die Dicke der Deckschicht 10 bis 1000 µm, insbesondere 50 bis 300 µm, am meisten bevorzugt 100 bis 200 µm.

Nach dem Erstarren des Kunststoffs A wird die Deckschicht hinterspritzt. Zweckmäßigerweise wird das Formwerkzeug vor dem Hinterspritzen geschlossen. Das Hinterspritzen der Deckschicht oder Ausspritzen des Hohlraums in dem Formwerkzeug erfolgt in bekannter Weise durch Spritzgießen, wobei alle dem Fachmann bekannten Spritzgießtechnologien zum Einsatz kommen können. Nach dem Verfestigen der spritzgegossenen Kernkomponente wird das Formwerkzeug geöffnet und das Verbundformteil ausgeworfen.

Als Polymere für den Kunststoff A und/oder den Kunststoff B eignen sich alle thermoplastischen Kunststoffe, wobei diese keinen Beschränkungen unterliegen. Vorteilhafterweise werden Polyethylen (PE), Polypropylen (PP), Polystyrol (PS), Poly(methylmethacrylat) (PMMA), Acrylnitril/Styrol/Acrylester-Polymer (ASA), Polycarbonat (PC), Poly(arylenether) (PAE), insbesondere Poly(phenylenether) (PPE), Poly(arylensulfid) (PAS), insbesondere Poly(phenylensulfid) (PPS), Polyamide (PA), Polyoxymethylen (POM), Polyester, insbesondere Poly(butylenterephthalat) (PBT), thermoplastische Polyurethan-Elastomere (TPU) oder Blends solcher Kunststoffe verwendet.

Das erfindungsgemäße Verfahren findet insbesondere Anwendung bei der Herstellung von Verbundformteilen, deren Deckschicht und Kernkomponente unterschiedlichen Anforderungsprofilen genügen sollen. So eignet sich das Verfahren zur Herstellung von Verbundformteilen, deren Deckschicht z.B. eine bestimmte Farbe, UV-Schutz, Kratzfestigkeit, Oberflächengüte, Zähigkeit bzw. Weichheit oder Leitfähigkeit aufweist, während die Kernkomponente beispielsweise kostengünstig ist, große Steifigkeit und Festigkeit, Zähigkeit bzw. geringe Steifigkeit oder gute Wärmeformbeständigkeit aufweist. Je nach Anforderungsprofil werden zweckmäßigerweise für die Deckschicht eingefärbte Thermoplaste, UV-stabile oder -stabilisierte Thermoplaste, harte Thermoplaste, unverstärkte Thermoplaste mit guter Oberflächegüte bzw. definiertem Glanz, weiche/schlagzähmodifizierte Thermoplaste, zähe Thermoplaste oder leitfähige Thermoplaste verwendet. Für die Kernkomponente werden vorteilhafterweise kostengünstige Thermoplaste, Recyclate, Sekundaware, verstärkte Thermoplaste, zähe bzw. zähmodifizierte Thermoplaste, nicht-steife Thermoplaste oder teilkristalline und/oder glasfaserverstärkte Thermoplaste, oder Blends solcher Kunststoffe verwendet. Besonders bevorzugt ist die Kombination einer mit einem Stabilisator, Zähmodifier oder Piement veredelten Deckschicht mit einer kostengünstigen Kernkomponente oder die Kombination einer hochzähen Deckschicht mit einer hochsteifen Kernkomponente.

In einer bevorzugten Ausführungsform der Erfindung ist das Polymere des Kunststoffs A mit Pigmenten, z.B. Farb- oder Glanzpigmenten, UV-Stabilisatoren, Ruß, Leitfähigkeitsteilchen oder Zähmodifiern modifiziert. Vorzugsweise kann zur Witterungsstabilisierung ein spezieller Ruß und zur Erreichung von Leitfähigkeit ein Leitfähigkeitsruß vorgesehen sein. Als Zähmodifier können thermoplastische Polyacryl-Copolymere oder unterschiedliche Kautschuke verwendet werden. In einer bevorzugten Ausgestaltung der Erfindung ist das Polymermaterial des Kunststoffs B mit Glasfasern, Kohlenstoffasern, Glaskugeln und/oder Mineral verstärkt. Daneben kann jeder der beiden Kunststoffe A und B weitere übliche Additive oder Zusätze enthalten, z.B. Gleitmittel, Entformungshilfen, Flammschutzmittel, Stabilisatoren, Zähmodifier und/oder Nukleierungsmittel.

Die Haftung der Deckschicht auf der Kernkomponente ist um so besser, je ähnlicher die Polymermaterialien von Kunststoff A und Kunststoff B sind. Vorzugsweise werden deshalb die gleichen Polymermaterialien für die Deckschicht und Kernkomponente verwendet, die jedoch unterschiedlich modifi-ziert bzw. verstärkt sind. Es ist auch möglich, zwischen der Deckschicht und der Kernkomponente eine Zwischenschicht, z.B. zur Erhöhung der Adhäsion von Deckschicht und Kernkomponente, vorzusehen.

Besonders bevorzugte Kombinationsmöglichkeiten von Kunststoffen für die Deckschicht (Kunststoff A) und Kernkomponente (Kunststoff B) sind:
- hochpigmentiertes PBT (z.B. mit Metallflitter) und Standard-PBT, gegebenenfalls Recyclat oder Sekundaware;
- PBT/PC mit hoher UV-Schutzdosierung und Standard-PBT/PC;
- PMMA (mit oder ohne UV-Schutz) und PC/ASA oder PBT/PC ohne UV-Schutz;
- PA 66 und glasfaserverstärktes PA 66;
- TPU und glasfaserverstärktes PA 6; oder
- leitfähiges POM und ein PA/PPE-Blend.

Der Kunststoff A wird als Pulver vorzugsweise mit einer Teilchengröße von 50 bis 100µm, vorzugsweise von 50 bis 70µm, verwendet. Grundsätzlich geht man zweckmäßigerweise bei den Kunststoffen A und B von Granulaten aus, wobei sich alle Granulate eignen, z.B. solche mit einer Länge von 5 mm und einem Durchmesser von 2 bis 3 mm. Bei Kunststoff A wird das Granulat dann zu einem Pulver gemahlen.

Die mit dem erfindungsgemäßen Verfahren hergestellten Verbundformteile finden allgemein vorzugsweise überall dort Anwendung, wo ein unterschiedliches Anforderungsprofil für die Deckschicht und die Kernkomponente vorliegt. Die Verbundformteile finden insbesondere Anwendung bei großflächigen AutomobilAußenanwendungen, z.B. als Splitterschutz für großflächige Automobilteile.

Das erfindungsgemäße Verfahren ermöglicht es, auf einer Formteiloberfläche eine sehr gleichmäßig verteilte Deckschicht zu erzeugen. Dies gilt auch bei Ecken und Kanten oder anderen schwierigen Geometrien. Da das Material der Deckschicht mittels Flammspritzen aufgebracht wird, sind die Freiheitsgrade bei der Auswahl eines für die Deckschicht geeigneten Materials sehr groß. Daneben können durch Rezeptur dieses Materials gezielt die Oberflächeneigenschaften wie Oberflächengüte, geringe Entformungskräfte, Glanz, Härte, Lackhaftung, UV-Schutz, Zähigkeit oder Pigmentierung eingestellt werden.

Die Erfindung umfaßt auch ein Verbundformteil mit einer Deckschicht aus einem Kunststoff A und einer Kernkomponente aus einem Kunststoff B, wobei die Deckschicht eine durch Flammspritzen des Kunststoff A auf die Oberfläche eines Werkzeugs gebildete Schicht ist. Vorzugsweise sind die Deckschicht und/oder Kernkomponente so zusammengesetzt, wie es oben beschrieben ist.

Die Erfindung wird durch die folgenden Beispiele näher veranschaulicht, die bevorzugte Ausführungsformen der Erfindung darstellen.

### BEISPIELE

### Versuchseinrichtung

Es wurde eine Schneckenspritzgießmaschine von Arburg, Typ Allrounder 300 verwendet. Das Werkzeug war eine Rundscheibe mit D = 60mm und d = 3mm. Die eingesetzte Flammspritzpistole war vom Typ Mini-Spray-Jet Nr. 0600155.

### Eingesetzte Materialien

Als Kunststoff A wurde das gemäß Tabelle 1 unten aufgeführte Polymer eingesetzt, das aus einem handelsüblichen Granulat zu einem Pulver der Teilchengröße 50µm gemahlen wurde. Als Kunststoff B wurde ein Polymermaterial gemäß Tabelle 1 unten als handelsübliches Granulat eingesetzt.

**Tabelle 1:**

| Eingesetzte Materialien | | | |
|---|---|---|---|
| Beispiel | Kunsfstoff A | Kunststoff B | Kunststoff A zum Beschichten einer (1) oder (2) beider Werkzeughälften |
| 1 | POM¹ | glasfaserverstärktes POM² | 1 |
| 2 | POM¹ | schlagzäh modifiziertes POM³ | 1 |
| 3 | leitfähiges POM⁴ | POM¹ | 1 |
| 4 | gefärbtes PBT⁶ | PBT⁵ | 2 |
| 5 | gefärbtes und stabilisiertes PBT⁷ | zähmodifiziertes PBT+PC-Blend⁹ | 2 |
| 6 | gefärbtes und laserbeschriftbares PBT⁸ | PBT+ ASA, glasfaserverstärkt¹⁰ | 2 |
| 7 | PMMA¹¹ | ASA+PC¹² | 1 |
| 8 | TPU¹³ | glasfaserverstärktes PA6¹⁴ | 2 |
| 9 | PA66¹⁵ | glasfaserverstärktes PA66¹⁶ | 2 |
| 10 | leitfähiges POM⁴ | PA66+ PPE¹⁷ | 1 |
| 11 | PP¹⁸ | PBT+ASA, glasfaserverstärktes¹⁰ | 2 |

| | | | |
|---|---|---|---|
| 1 POM (Ultraform S 2320 003) | | | |
| 2 POM-GF30 (Ultraform N 2200 G63) | | | |
| 3 POM-Z30 (Ultraform N 2640 Z6) | | | |
| 4 POM, leitfähig (Ultraform N 2520XL2) | | | |
| 5 PBT (Ultradur B 4520) | | | |
| 6 PBT, gefärbt (Ultradur B 4520 schwarz 110) | | | |
| 7 PBT, gefärbt und UV-stabilisiert (Ultradur B 4520 schwarz 1008 Q 29) | | | |
| 8 PBT, gefärbt und laserbeschriftbar (Ultradur B 4520 schwarz 10067) | | | |
| 9 PBT + PC-Blend, zähmodifiziert (Ultradur KR 4080) | | | |
| 10 PBT+ ASA-GF30 (Ultradur S 4090 G6) | | | |
| 11 PMMA (Lucryl G 77) | | | |
| 12 ASA + PC (Terblend S KR 2861) | | | |
| 13 TPU (Elastollan 60 A) | | | |
| 14 PA6-GF30 (Ultramid B3EG6) | | | |
| 15 PA66 (Ultramid A3K) | | | |
| 16 PA66-GF30, Recyclat (Ultramid RC 6600) | | | |
| 17 PA66 + PPE (Ultramid KR 4209) | | | |
| 18 PP (Novolen 2500 TCX) | | | |

### Versuchsdurchführung

Das geöffnete Spritzgießwerkzeug wurde mit der Flamme oder indirekt mittels Öloder Dampftemperierung auf Temperaturen erhitzt, die oberhalb des Schmelz- oder Erweichungspunktes des Kunststoffs A lagen. Anschließend wurde der Kunststoff A in Pulverform in üblicher Flammspritztechnologie als Deckschicht gleichmäßig auf die Oberfläche einer (1) oder beider Werkzeughälften (2) in einer Schichtdicke von 150µm aufgetragen. Die Aufsprühzeit betrug etwa 5 bis 10 sec., so daß die Gesamtzykluszeit nicht oder nur unwesentlich beeinflußt wurde. Anschließend wurde das Formwerkzeug geschlossen und in üblicher Spritzgießtechnologie mit Kunststoff B ausgespritzt.

### Versuchsergebnisse

In Tabelle 2 unten sind die Vorteile der erhaltenen Verbundformkörper gegenüber einem analogen Spritzgießkörper, der zu 100% aus Kunststoff A bzw. Kunststoff B hergestellt wurde. Nicht erwähnte mecharische oder thermische Eigenschaften lagen im Bereich der Werte analoger Spritzgießkörper, die zu 100% aus Kunststoff B hergestellt wurden.

**Tabelle 2**

| Beispiel | V/A¹ | V/A² |
|---|---|---|
| 1 | Steifigkeit und Festigkeit des Kunststoffs A | Oberflächenqualität des Kunststoffs A |
| 2 | Zähigkeit des Kunststoffs B | Witterungsbeständigkeit und geringe Vergilbungsneigung des Kunststoffs A |
| 3 | Zähigkeit und Fließfahigkeit des Kunststoffs B | geringer Oberflächenwiderstand |
| 4 | Kosten | Farbort |
| 5 | Kosten | Farbort, UV-Stabilität |
| 6 | Kosten | Laserbeschriftbarkeit |
| 7 | Schlagzähigkeit, Wärmeformbeständigkeit | Kratzfestigkeit |
| 8 | Steifigkeit, Festigkeit | Weichheit, "Griff" |
| 9 | Kosten | Oberflächenqualität |
| 10 | Schiagzähigkeit, Wärmeformbeständigkeit | Lackierbarkeit im Elektrotauchverfahren ohne Vorbehandlung |
| 11 | Steifigkeit, Festigkeit, Wärmebeständigkeit | Wasserdurchlässigkeit, Hydrolysebeständigkeit |

| | | |
|---|---|---|
| 1 Vorteil des erhaltenen Verbundformkörpers gegenüber einem analogen Spritzgießkörper, der 100% aus Kunststoff A hergestellt wurde. | | |
| 2 Vorteil des erhaltenen Verbundformkörpers gegenüber einem analogen Spritzgießkörper, der 100% aus Kunststoff B hergestellt wurde. | | |

## Patentansprüche

1. Verfahren zur Herstellung von Verbundformteilen mit einer Deckschicht und einer spritzgegossenen Kernkomponente aus thermoplastischen Kunststoffen, dadurch gekennzeichnet, daß man einen pulverförmigen, thermoplastischen Kunststoff A durch Flammspritzen auf die Oberfläche eines Formwerkzeugs unter Ausbildung der Deckschicht aufträgt, den Kunststoff A auf der Oberfläche erstarren läßt und anschließend mit einem thermoplastischen Kunststoff B mittels Spritzgießen ausspritzt.

2. Verfahren nach Anspruch 1, dadurch gekennzeichnet, daß man die Oberfläche des Formwerkzeugs mindestens auf den Erweichungspunkt oder Schmelzpunkt des Kunststoffs A erhitzt.

3. Verfahren nach Anspruch 1 oder 2, dadurch gekennzeichnet, daß die Deckschicht in einer Dicke von 10 - 1000 µm aufgetragen wird.

4. Verfahren nach einem der vorhergehenden Ansprüche, dadurch gekennzeichnet, daß die Deckschicht gesintert wird, indem man die Formwerkzeugoberfläche für 0,2 - 3,0 min nach dem Auftragen der Deckschicht bei einer Temperatur mindestens über dem Schmelz- oder Erweichungspunkt des Kunststoffs A beläßt.

5. Verfahren nach einem der vorhergehenden Ansprüche, dadurch gekennzeichnet, daß der Kunststoff A und/oder der Kunststoff B aus Polyethylen, Polypropylen, Polystyrol, Poly(methylmethacrylat), Acrylnitril/Styrol/Acrylester-Polymer, Polycarbonat, Poly(arylenether), insbesondere Poly(phenylenether), Poly(arylensulfid), insbesondere Poly(phenylensulfid), Polyamiden, Polyoxymethylen, Polyester, insbesondere Poly(butylenterephthalat), thermoplastischen Polyurethan-Elastomeren und Blends solcher Kunststoffe ausgewählt wird.

6. Verfahren nach einem der vorhergehenden Ansprüche, dadurch gekennzeichnet, daß ein Kunststoff A verwendet wird, der mit Pigmenten, UV-Stabilisatoren, Zähmodifiern und/oder Leitfähigkeitsteilchen modifiziert ist.

7. Verfahren nach einem der vorhergehenden Ansprüche, dadurch gekennzeichnet, daß ein Kunststoff B verwendet wird, der mit Glasfasern, Kohlenstoffasern, Glaskugeln und/oder Mineral verstärkt ist.

8. Verfahren nach einem der vorhergehenden Ansprüche, dadurch gekennzeichnet, daß für Kunststoff A und Kunststoff B das gleiche Polymermaterial verwendet wird, wobei dieses für Kunststoff A und Kunststoff B unterschiedlich modifiziert oder verstärkt ist.

9. Verbundformteil mit einer Deckschicht aus einem Kunststoff A und einer spritzgegossenen Kernkomponente aus einem Kunststoff B, dadurch gekennzeichnet, daß die Deckschicht eine durch Flammspritzen des Kunststoffs A auf die Oberfläche eines Formwerkzeugs gebildete Schicht ist.

10. Verbundformteil nach Anspruch 9, dadurch gekennzeichnet, daß die Deckschicht und/oder die Kernkomponente so zusammengesetzt sind, wie es in einem der Ansprüche 1 bis 8 definiert ist.
